# EUROPEAN PATENT SPECIFICATION

(11) **EP 2 685 437 B1**
(45) Date of publication and mention of the grant of the patent: **03.02.2016**
(21) Application number: 12758282.3
(22) Date of filing: 09.03.2012
(51) Int. Cl.: G08B 17/107, G01N 21/53, G08B 17/06, G08B 17/10

(54) **FIRE SENSOR**
BRANDSENSOR
CAPTEUR D'INCENDIE

(30) Priority: 11.03.2011 JP 2011053914
(43) Date of publication of application: 15.01.2014
(73) Proprietor: Panasonic Intellectual Property Management Co., Ltd., Osaka 540-6207 (JP)
(72) Inventor: SHIMADA, Yoshitake, Chuo-ku, Osaka 540-6207 (JP)
(74) Representative: Appelt, Christian W.
(86) International application number: PCT/IB2012/000442
(87) International publication number: WO 2012/123796

(56) References cited:
- EP-A2- 1 253 566
- EP-A2- 2 109 085
- JP-A- 2002 352 346
- JP-A- 2003 067 862

## Description

### Field of the Invention

The present invention relates to a fire sensor for detecting a fire by sensing smoke and heat.

### Background of the Invention

As the conventional fire sensor, there is known a fire sensor in which a thermistor installed upright on a substrate is arranged to extend through a smoke sensing space, thereby sensing a temperature (see, e.g., Patent Document 1).

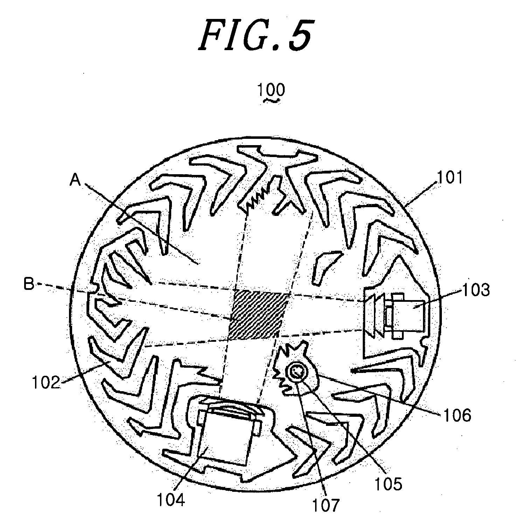

One example of the conventional fire sensor is shown in Fig. 5. A fire sensor 100 includes a smoke sensing chamber 101 around which a plurality of labyrinth walls 102 is installed, a light emitting unit 103 for irradiating light into a smoke sensing space A of the smoke sensing chamber 101, a light receiving unit 104 arranged in a position where the light receiving unit 104 does not directly receive the light irradiated from the light emitting unit 103, and a thermistor 105. A light shield wall 106 for shielding the light irradiated from the light emitting unit 103 to the light receiving unit 104 without being scattered by smoke is installed upright in the smoke sensing space A. The region where the field of view seen from the light emitting unit 103 and the field of view seen from the light receiving unit 104 intersect each other becomes a smoke sensing region B. The light scattered by smoke in the smoke sensing region B is detected by the light receiving unit 104, thereby sensing the smoke. A through-hole 107 is formed in the light shield wall 106. The thermistor 105 is inserted into the through-hole 107. The thermistor 105 is installed upright on a substrate lying below the smoke sensing chamber 101 and is configured to detect a temperature.

[Patent Document 1] Japanese Patent Application Publication No. 11-185179

In the fire sensor disclosed in Patent Document 1, the support member of the thermistor directly passes through the substantially central region of the smoke sensing space. Therefore, it is sometimes the case that the flow of smoke toward the smoke sensing space is hindered or the light is scattered. In the fire sensor 100 shown in Fig. 5, the volume of the light shield wall 106 is increased and the flow of smoke from the gaps between the labyrinth walls 102 toward the smoke sensing space A is inhibited. For that reason, it is often the case that the sensitivity of smoke sensing in the smoke sensing region is reduced and the response is delayed.

EP 2 109 085 A2 describes a combination smoke and heat detector, comprising a body base; a printed circuit board mounted to the body base; a thermosensitive element provided upright on the printed circuit board; a dark chamber mounted to the printed circuit board, for shielding external light so that smoke particles flow therein; an indication lamp mounted to the printed circuit board; a protective cover which is provided with respective opening holes through which the thermosensitive element and the dark chamber pass, and engaged with the body base; and a bar-like light guide for guiding light emitted from the indication lamp to outside of the protective cover.

EP 1 253 566 A2 describes a fire detector unit comprising a base made of a molded plastic to have a labyrinth wall which projects on the circumference of said base to define therein a smoke chamber, said labyrinth wall permitting an entry of smoke particles but prohibiting the entry of an ambient light into said smoke chamber; a light projector carried on said base and directing an incident light from a light emitting element into said smoke chamber; a light collector carried on said base and collecting a light scattered by the smoke particles in said smoke chamber to a light receiving element, said light receiving element generating an electric signal indicative of the amount of the light received; a fire detecting circuit being connected to receive said electric signal so as to provide a fire warning signal based upon said electric signal; and a circuit board mounting said light emitting element, said light receiving element, and electronic components forming said fire detecting circuit.

In view of the problems noted above, it is an object of the present invention to provide a fire sensor including a heat sensor extending through a smoke sensing space, which is capable of suppressing the reduction of the smoke sensing sensitivity and response delay otherwise caused by the arrangement of the heat sensor.

### Summary of the Invention

In accordance with the present invention, there is provided a fire sensor, inter alia including: a plurality of labyrinth walls installed along a circumferential direction so as to surround a smoke sensing space; a light emitting unit arranged to irradiate light toward the smoke sensing space; a light receiving unit arranged in a position where the light receiving unit does not directly receive the light emitted from the light emitting unit; and a heat sensor, wherein the smoke sensing space includes a smoke sensing region defined by a light emission zone extending from the light emitting unit and a light reception zone extending from the light receiving unit, the fire sensor configured to detect a fire when the light receiving unit receives the scattered light of the light emitting unit generated in the smoke sensing region by smokes introduced into the smoke sensing space through gaps between the labyrinth walls, and wherein a penetration space is formed by a housing making up the light emitting unit or the light receiving unit, the penetration space separated from the smoke sensing space, the penetration space extending through the housing from the side of a housing mounting board to which the housing is mounted toward a detection target space, the heat sensor inserted into the penetration space, wherein the penetration space is arranged in a light emission platform portion for accommodating the light emitting unit or in a light reception platform portion for accommodating the light receiving unit.

In the object detection device, a narrow region existing between the light emitting unit and the light receiving unit and not including the smoke sensing region is defined in the smoke sensing space, the penetration space arranged in the narrow region.

### Effect of the Invention

According to the fire sensor of the present invention, the penetration space for the heat sensor to pass through is defined by the housing of the light emitting unit or the light receiving unit. It is therefore possible to reduce the volume defining the penetration space, to reduce the obstruction of the flow of an air into the smoke sensing space and to suppress the reduction of the smoke sensing sensitivity and response delay.

### Brief Description of the Drawings

Objects and features of the present invention will become more apparent from the following description of preferred embodiments given in conjunction with the accompanying drawings.
Fig. 1A is an outer appearance view of a fire sensor according to a first embodiment of the present invention and Fig. 1B is an exploded perspective view of the fire sensor.
Fig. 2 is a perspective view of an optical base of the fire sensor.
Fig. 3 is a bottom plan view of the optical base of the fire sensor installed on a ceiling surface.
Fig. 4A is a plan view of an optical base of a fire sensor according to a second embodiment of the present invention and Fig. 4B is a section view taken along line X-X in Fig. 4A.
Fig. 5 is a plan view of a smoke sensing chamber of a conventional fire sensor.

### Detailed Description of the Embodiments

Embodiments of the present invention will now be described in detail with reference to the accompanying drawings which form a part hereof. Throughout the drawings, identical or similar parts will be designated by like reference symbols with no redundant description made thereon.

### (First Embodiment)

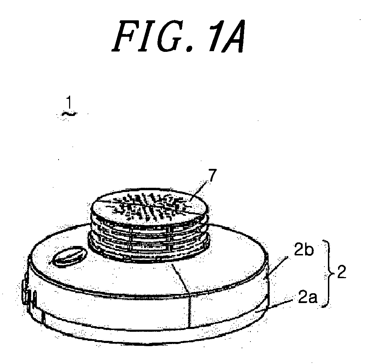

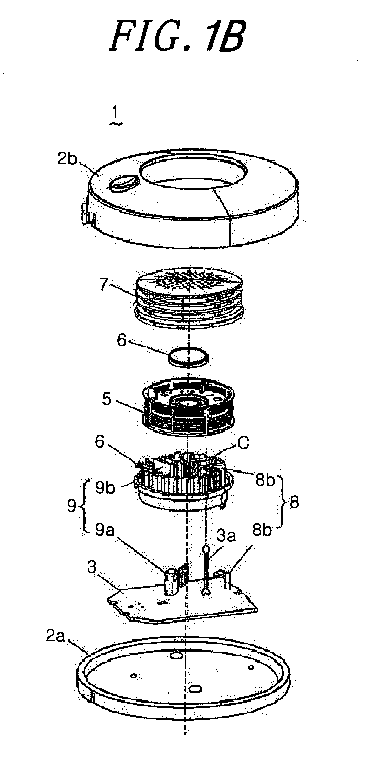

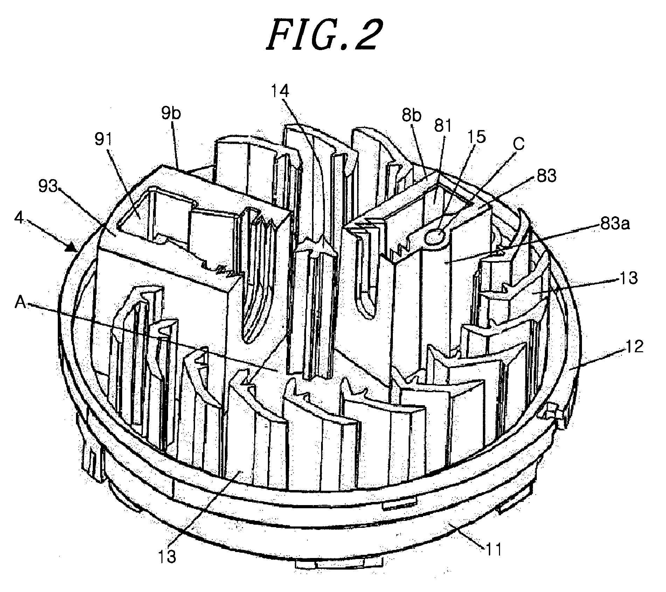

A fire sensor according to a first embodiment of the present invention will be described with reference to Figs. 1A to 3. The fire sensor of the present embodiment is a complex type sensor having a smoke sensing function of a smoke sensor and a heat sensing function of a heat sensor. The fire sensor is a device that generates a fire alarm if a smoke sensing level or a heat sensing level exceeds a predetermined threshold value. As shown in Fig. 1A, the outer shell of the fire sensor 1 includes a resin-made body 2 attachable to a ceiling surface or the like and a sensor cover 7. The body 2 is formed of a base 2a and a cover 2b. In the perspective views of Figs. 1A, 1B and 2, the fire sensor is shown in an upside-down state. The lower side of the fire sensor 1 on the drawing sheet is attached to a ceiling surface or the like.

The internal structure of, the fire sensor 1 will be described with reference to Fig. 1B. The fire sensor 1 includes a circuit board 3 for mounting circuit parts, a smoke sensing optical base 4 mounted to the circuit board 3, a bug-proof cover 5 and a speaker 6, all of which are accommodated within the sensor cover 7 and the cover 2b.

The sensor cover 7 accommodates the optical base 4, the bug-proof cover 5 and the speaker 6 therein and serves as a protection cover for protecting the optical base 4, the bug-proof cover 5 and the speaker 6. The sensor cover 7 is formed into a closed-bottom cylindrical shape. A plurality of hull support portions and a plurality of opening portions are alternately formed on the side surface of the sensor cover 7. Smoke infiltrates from the outside into a smoke sensing space existing above the optical base 4 through the opening portions of the sensor cover 7 and the apertures of an insect screen of the bug-proof cover 5.

The base 2a is made of a resin and is formed into a substantially disc-like shape. Two screw holes are formed on the installation surface of the base 2a so that the base 2a can be screw-fixed to, e.g., a ceiling surface. The cover 2b accommodates parts of the fire sensor 1 therein. The cover 2b is coupled to the base 2a by rotating the cover 2b clockwise while moving the cover 2b toward the base 2a. The sensor cover 7 and the cover 2b are each formed of a metal portion as a core member and an insulating resin coated on the metal portion.

The bug-proof cover 5 is of a structure having an insect screen for preventing bugs or dirt from entering a smoke sensing region. The bug-proof cover 5 is configured so that the lower end portion thereof can be fitted to the peripheral wall of the optical base 4. The speaker 6 is fitted to the upper surface of the bug-proof cover 5. The speaker 6 has a function of generating an alarm sound for the notification of fire sensing. In the fire sensor, a narrow region existing between a light emitting unit and a light receiving unit and not including the smoke sensing region is defined in the smoke sensing space. It is preferred that a penetration space is arranged in the narrow region.

A resin-made printed board, a ceramic board or the like is used as the circuit board 3. The circuit board 3 includes the light emitting unit 8 and the light receiving unit 9. The light emitting unit 8 is provided with an LED 8a that irradiates light for sensing smoke. The light receiving unit 9 is provided with a PD (Photo Diode) 9a for sensing the light emitted from the LED 8a and scattered by smoke. The circuit board 3 further includes a heat sensor, e.g., a thermistor 3a, and a circuit part, e.g., a microcomputer for outputting a fire alarm signal on the basis of a smoke sensing signal from the light receiving unit 9 and a heat sensing signal from the thermistor 3a.

The optical base 4 includes a light emission platform portion 8b and a light reception platform portion 9b for accommodating the LED 8a and the PD 9a, respectively. A through-hole 15 (see Fig. 2) for defining a penetration space C through which the thermistor 3a passes is integrally formed in the light emission platform portion 8b. The thermistor 3a includes a thermistor element portion arranged at the tip end of a lead electrically connected to the circuit board 3. The thermistor 3a is mounted upright on the part mounting surface of the circuit board 3.

The LED 8a is accommodated within the light emission platform portion 8b of the optical base 4 from the bottom surface side thereof. The PD 9a is accommodated within the light reception platform portion 9b. The thermistor 3a is mounted so as to pass through the penetration space C. The thermistor 3a protrudes from the circuit board 3 through the optical base 4. The thermistor 3a is mounted so that the thermistor element portion thereof can be spaced apart from the circuit board 3.

The detailed configuration of the optical base 4 will be further described. As shown in Fig. 2, the optical base 4 has a closed-bottom cylindrical shape and includes a substantially disc-shaped bottom plate 11, a peripheral wall 12 installed to protrude from the bottom plate 11 and a plurality of labyrinth walls 13 installed upright on the bottom plate 11 and arranged along the peripheral wall 12. The bottom plate 11, the peripheral wall 12 and the labyrinth walls 13 are integrally formed with the light emission platform portion 8b and the light reception platform portion 9b. The optical base 4 may be made of a black synthetic resin in order to restrain the light from being reflected by the respective portions including the labyrinth walls 13.

The labyrinth walls 13 are formed of partition walls having a substantially F-like horizontal cross section. The labyrinth walls 13 are arranged along the circumferential direction to define a smoke sensing area having a circular horizontal cross section on the optical base 4. The smoke sensing area defines a smoke sensing space A for detecting the smoke infiltrated from the outside. Smoke introduction paths are formed between the labyrinth walls 13 adjoining one another. One ends of the smoke introduction paths become smoke introduction ports communicating with the outside and the other ends of the smoke introduction paths communicate with the smoke sensing space A. In this regard, the F-like curved protrusions of the labyrinth walls 13 prevent external light from directly entering the smoke sensing space A through the smoke introduction paths.

The light emission platform portion 8b and the light reception platform portion 9b are formed in a platform shape to protrude from the bottom plate 11 of the optical base 4 toward the smoke sensing space A of the optical base 4. The light emission platform portion 8b and the light reception platform portion 9b have through-holes 81 and 91 for accommodating the LED 8a and the PD 9a. Grooves connected to the through-holes 81 and 91 are formed in the light emission platform portion 8b and the light reception platform portion 9b. The light emission platform portion 8b and the light reception platform portion 9b include peripheral walls 83 and 93 as side walls surrounding the through-holes 81 and 91 and the grooves connected to the through-holes 81 and 91. Optical parts such as lenses and the like are installed in the grooves of the light emission platform portion 8b and the light reception platform portion 9b. The optical axes of the respective lenses extend toward the center of the smoke sensing space A and intersect each other at a predetermined angle. The lenses face toward the light emission surface of the LED 8a and the light reception surface of the PD 9a. The light emitted from the LED 8a is collected by the lense to be irradiated into the smoke sensing space A.

The through-hole 15 is formed in the light emission platform portion 8b to extend from the circuit board 3 toward a detection target space (room). The through-hole 15 is defined within a protrusion portion 83a formed by partially bulging the peripheral wall 83 of the light emission platform portion 8b. Accordingly, about one half of the volume of the through-hole 15 is included in the light emission platform portion 8b. The through-hole 15 may be formed in other portions than the peripheral wall 83 as long as the through-hole 15 is integrally formed with the light emission platform portion 8b. Instead of changing the external shape of the light emission platform portion 8b, the through-hole 15 as a whole may be included in the light emission platform portion 8b.

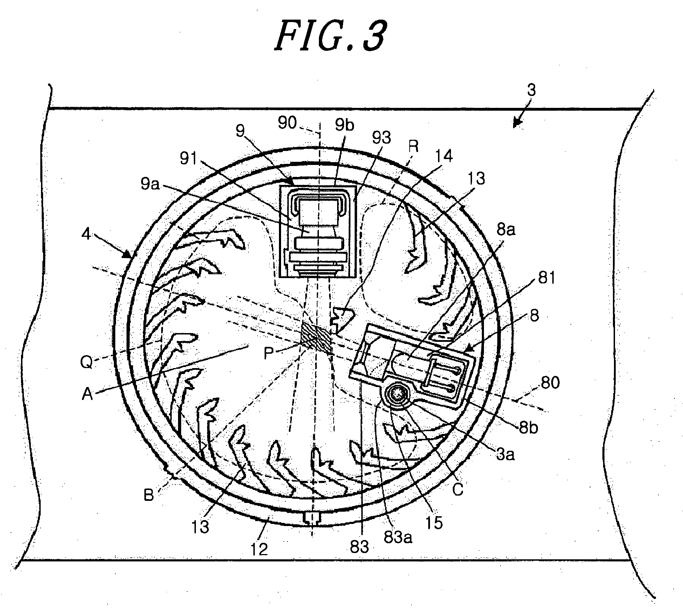

As shown in Fig. 3, the circuit board 3 is attached to the light emission platform portion 8b and the light reception platform portion 9b of the optical base 4 in a state that the optical parts such as the lenses and the like are attached thereto. Thus, the LED 8a and the PD 9a are arranged within the light emission platform portion 8b and the light reception platform portion 9b. At this time, the thermistor 3a passes through the through-hole 15 of the light emission platform portion 8b and can extend to the vicinity of the upper surface of the sensor cover 7. The thermistor 3a is arranged in a position where the thermistor 3a can easily sense the heat generated by smoke or the like.

The light emission platform portion 8b and the light reception platform portion 9b are formed such that the plan-view intersection point P of an optical axis 80 of the light emission surface and an optical axis 90 of the light reception surface thereof is positioned at the center of the smoke sensing space A. In the smoke sensing space A surrounded by the labyrinth walls 13, the region where the emission zone of the light emitted from the light emitting unit 8 of the light emission platform portion 8b overlaps with the reception zone of the light received by the light receiving unit 9 of the light reception platform portion 9b will be referred to as a smoke sensing region B. The scattered light generated in the smoke sensing region B when the light coming from the LED 8a accommodated in the light emission platform portion 8b is scattered by the particles of smoke, is sensed with high sensitivity by the PD 9a accommodated in the light reception platform portion 9b.

In the smoke sensing space A, there are formed a narrow region R existing between the light emission platform portion 8b and the light reception platform portion 9b and not including the smoke sensing region B and a wide region Q excluding the narrow region R and including the smoke sensing region B. The narrow region R is a region narrower than the wide region Q. In a plan view, the narrow region R exists between the light emission platform portion 8b and the light reception platform portion 9b in the 360 degree directions about the intersection point P of the optical axes 80 and 90 of the light emitting unit 8 and the light receiving unit 9. The narrow region R does not include the smoke sensing region B. The through-hole 15 of the light emission platform portion 8b is positioned in the peripheral wall 83 facing toward the wide region Q where the through-hole 15 can be easily arranged.

According to the present embodiment, the penetration space C for the thermistor 3a to pass through is integrally formed with the light emission platform portion 8b. It is therefore possible to reduce the volume defining the penetration space C, to reduce the obstruction of the flow of an air into the smoke sensing space A and to suppress the reduction of the smoke sensing sensitivity and response delay.

### (Second Embodiment)

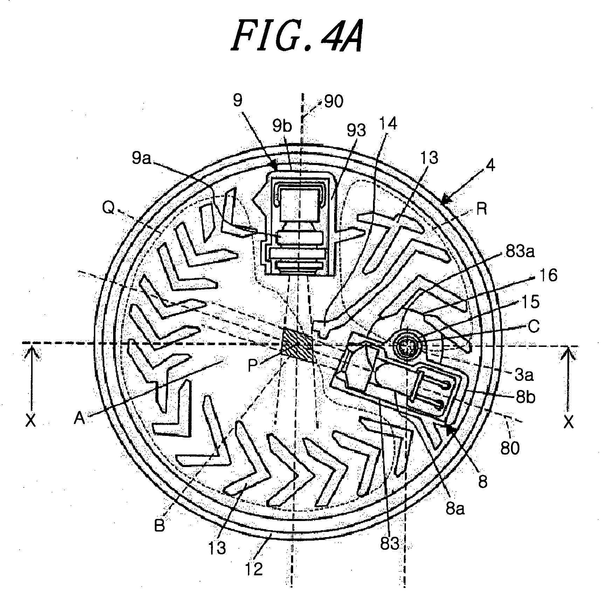

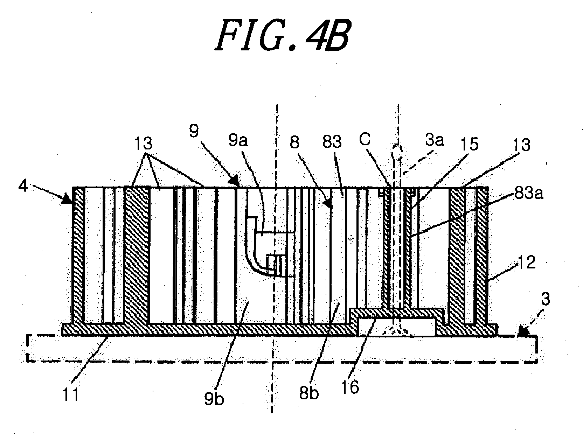

A fire sensor according to a second embodiment of the present invention will be described with reference to Figs. 4A and 4B. In the present embodiment, unlike the first embodiment, the penetration space C belonging to the smoke sensing space A of the optical base 4 is arranged at the side of the narrow region R existing between the light emission platform portion 8b and the light reception platform portion 9b and not including the smoke sensing region B where smoke is sensed by the light emitting unit 8 and the light receiving unit 9.

In the optical base 4 of the present embodiment, the penetration space C for the thermistor 3a to pass through is formed in the peripheral wall 83 extending along the irradiation direction of the light emission platform portion 8b and facing toward the narrow region R of the smoke sensing space A. As mentioned above, the thermistor 3a is installed upright on the circuit board 3 and is arranged to pass through the through-hole 15 and to protrude beyond the optical base 4. In this case, as set forth above, about one half of the volume of the through-hole 15 is included in the light emission platform portion 8b. The labyrinth walls 13 are formed to have a substantially L-like cross section, thereby simplifying the configuration of the labyrinth walls 13.

As stated above, the narrow region R of the smoke sensing space A refers to a region which exists between the light emission platform portion 8b and the light reception platform portion 9b when seen from the plan-view intersection point P of the optical axes 80 and 90 of the light emitting unit 8 and the light receiving unit 9 and which does not include the smoke sensing region B. A light shield wall 14 is positioned in the narrow region R.

The optical base 4 includes a cylindrical raised bottom platform 16 formed in the light emission platform portion 8b. The raised bottom platform 16 lifts up the bottom portion of the through-hole 15 in order to mount the circuit parts such as the thermistor 3a and the like to the circuit board 3. The through-hole 15 is integrally formed with the raised bottom platform 16. The support pole of the thermistor 3a is mounted to the circuit board 3 within the raised bottom platform 16 and is inserted into the through-hole 15 through the raised bottom platform 16.

According to the present embodiment, in the light emission platform portion 8b, the peripheral wall 83 in which the through-hole 15 is formed is provided to face toward the narrow region R of the smoke sensing space A. For that reason, when seen from the smoke sensing region B, the position of the protrusion portion 83a of the peripheral wall 83 partially protruding due to the existence of the through-hole 15 is hidden behind the block of the light emission platform portion 8b. Accordingly, the light becoming a noise is less likely to reach the protrusion portion 83a. Even if the light reaches the protrusion portion 83a, the light is attenuated by the repeated reflection before arriving at the light emission platform portion 8b. The protrusion portion 83a is arranged in a position where the light arrives with attenuated intensity. This reduces the optical adverse affect on the protrusion portion 83a. Accordingly, the light receiving unit 9 is prevented from sensing the light other than the scattered light by smoke in the smoke sensing region B. It is therefore possible to avoid an erroneous operation otherwise caused by the superficial increase of the smoke particles attributable to the noise light. This makes it possible to increase the smoke sensing accuracy and reliability.

Even if the raised bottom platform 16 is provided to arrange the circuit parts such as the heat sensor and the like, the intensity of the scattered light arriving at the raised bottom platform 16 is attenuated and reduced. This reduces the optical affect of the raised bottom platform 16 as set forth above. In other words, the scattered light from the raised bottom platform 16 is not incident on the light receiving unit 9. Even when the scattered light from the raised bottom platform 16 is incident on the light receiving unit 9, the intensity of the scattered light is sufficiently attenuated. Thus, the scattered light from the raised bottom platform 16 has no optical affect.

The present invention is not limited to the configurations of the embodiments described above and may be modified in many different forms without departing from scope of the invention. For example, in the respective embodiments described above, the penetration space C for the thermistor 3a to pass through is arranged in the light emission platform portion 8b. However, the penetration space C may be arranged in the light reception platform portion 9b. The penetration space C may be provided in both of the light emission platform portion 8b and the light reception platform portion 9b, and heat sensors having different temperature sensing levels may be arranged to pass through the respective penetration spaces C. The sensor passing through the penetration space C is not limited to the heat sensor but may be other environment measuring sensors such as a gas sensor and a humidity sensor.

While the preferred embodiments of the present invention have been described above, the present invention is not limited to these specific embodiments but can be changed or modified in many different forms without departing from the scope of the claims. Such changes or modifications shall be construed to fall within the scope of the present invention.

## Claims

1. A fire sensor (1), comprising:
a plurality of labyrinth walls (13) installed along a circumferential direction so as to surround a smoke sensing space (A);
a light emitting unit (8) arranged to irradiate light toward the smoke sensing space (A);
a light receiving unit (9) arranged in a position where the light receiving unit (9) does not directly receive the light emitted from the light emitting unit (8); and
a heat sensor (3a),
wherein the smoke sensing space (A) includes a smoke sensing region (B) defined by a light emission zone extending from the light emitting unit (8) and a light reception zone extending from the light receiving unit (9), the fire sensor (1) configured to detect a fire when the light receiving unit (9) receives the scattered light of the light emitting unit (8) generated in the smoke sensing region (B) by smokes introduced into the smoke sensing space (A) through gaps between the labyrinth walls (13),
wherein a penetration space (C) is formed by a housing (4, 8b) making up the light emitting unit (8) or the light receiving unit (9), the penetration space (C) separated from the smoke sensing space (A), the penetration space (C) extending through the housing (4, 8b) from the side of a housing mounting board (3) to which the housing (4) is mounted toward a detection target space, the heat sensor (3a) inserted into the penetration space (C), **characterized in that**
the penetration space (C) is arranged in a light emission platform portion (8b) for accommodating the light emitting unit (8) or in a light reception platform portion (9b) for accommodating the light receiving unit (9).

2. The fire sensor of claim 1, wherein a narrow region (R) existing between the light emitting unit (8) and the light receiving unit (9) and not including the smoke sensing region (B) is defined in the smoke sensing space (A), the penetration space (C) arranged in the narrow region (R).

## Patentansprüche

1. Brandsensor (1), umfassend:
mehrere Labyrinthwände (13), die entlang einer Umfangsrichtung aufgestellt sind, um einen Raucherfassungsraum (A) zu umgeben;
eine Lichtemissionseinheit (8), die angeordnet ist, um Licht zu dem Raucherfassungsraum (A) auszustrahlen;
eine Lichtempfangseinheit (9), die in einer Position angeordnet ist, an der die Lichtempfangseinheit (9) das Licht, das von der Lichtemissionseinheit (8) ausgestrahlt wird, nicht direkt empfängt; und
einen Wärmesensor (3a),
wobei der Raucherfassungsraum (A) einen Raucherfassungsbereich (B) enthält, der durch eine Lichtemissionszone, die sich von der Lichtemissionseinheit (8) erstreckt, und eine Lichtempfangszone, die sich von der Lichtempfangseinheit (9) erstreckt, festgelegt ist, wobei der Brandsensor (1) ausgestaltet ist zur Erfassung eines Brandes, wenn die Lichtempfangseinheit (9) das gestreute Licht der Lichtemissionseinheit (8), das in dem Raucherfassungsbereich (B) von Rauch erzeugt wird, der durch Lücken zwischen den Labyrinthwänden (13) in den Raucherfassungsraum (A) gelangt, empfängt,
wobei ein Eindringraum (C) aus einem Gehäuse (4, 8b), das die Lichtemissionseinheit (8) oder die Lichtempfangseinheit (9) bildet, gebildet ist, wobei der Eindringraum (C) von dem Raucherfassungsraum (A) getrennt ist, wobei der Eindringraum (C) sich durch das Gehäuse (4, 8b) von der Seite einer Gehäusemontageplatte (3), an der das Gehäuse (4) zu einem Erfassungszielraum hin montiert ist, erstreckt, wobei der Wärmesensor (3a) in den Eindringraum (C) eingefügt ist, **dadurch gekennzeichnet, dass**
der Eindringraum (C) in einem Abschnitt einer Lichtemissionsplattform (8b) zur Aufnahme der Lichtemissionseinheit (8) oder in einem Abschnitt einer Lichtempfangsplattform (9b) zur Aufnahme der Lichtempfangseinheit (9) angeordnet ist.

2. Brandsensor nach Anspruch 1, wobei ein enger Bereich (R) zwischen der Lichtemissionseinheit (8) und der Lichtempfangseinheit (9), der den Raucherfassungsbereich (B) nicht umfasst, in dem Raucherfassungsraum (A) festgelegt ist, wobei der Eindringraum (C) in dem engen Bereich (R) angeordnet ist.

## Revendications

1. Capteur d'incendie (1), comprenant :
une pluralité de parois de labyrinthe (13) installées le long d'une direction circonférentielle de manière à entourer un espace de détection de fumée (A) ;
une unité émettrice de lumière (8) conçue pour rayonner de la lumière vers l'espace de détection de fumée (A) ;
une unité réceptrice de lumière (9) agencée dans une position dans laquelle l'unité réceptrice de lumière (9) ne reçoit pas directement la lumière émise par l'unité émettrice de lumière (8) ; et
un capteur de chaleur (3a),
dans lequel l'espace de détection de fumée (A) comprend une région de détection de fumée (B) définie par une zone d'émission de lumière s'étendant à partir de l'unité émettrice de lumière (8) et une zone de réception de lumière s'étendant à partir de l'unité réceptrice de lumière (9), le capteur d'incendie (1) étant configuré pour détecter un incendie lorsque l'unité réceptrice de lumière (9) reçoit la lumière diffusée de l'unité émettrice de lumière (8) générée dans la région de détection de fumée (B) par les fumées introduites dans l'espace de détection de fumée (A) à travers les interstices entre les parois de labyrinthe (13),
dans lequel un espace de pénétration (C) est formé par un logement (4, 8b) constituant l'unité émettrice de lumière (8) ou l'unité réceptrice de lumière (9), l'espace de pénétration (C) étant séparé de l'espace de détection de fumée (A), l'espace de pénétration (C) s'étendant à travers le logement (4, 8b) depuis le côté d'une plaque de montage de logement (3) sur laquelle le logement (4) est monté vers un espace cible de détection, le capteur de chaleur (3a), le capteur de chaleur (3a) étant inséré dans l'espace de pénétration (C), **caractérisé en ce que**
l'espace de pénétration (C) est agencé dans une partie formant plate-forme d'émission de lumière (8b) destinée à accueillir l'unité émettrice de lumière (8) ou dans une partie formant plate-forme de réception de lumière (9b) destinée à accueillir l'unité réceptrice de lumière (9).

2. Capteur d'incendie selon la revendication 1, dans lequel une région étroite (R) existant entre l'unité émettrice de lumière (8) et l'unité réceptrice de lumière (9) et n'incluant pas la région de détection de fumée (B) est définie dans l'espace de détection de fumée (A), l'espace de pénétration (C) étant agencé dans la région étroite (R).
